# EUROPÄISCHE PATENTSCHRIFT

(11) **EP 1 436 607 B1**
(45) Veröffentlichungstag und Bekanntmachung des Hinweises auf die Patenterteilung: **30.03.2005**
(21) Anmeldenummer: 02701271.5
(22) Anmeldetag: 11.02.2002
(51) Int. Cl.: G01N 27/414

(54) **IONENSENSITIVER FELDEFFEKTTRANSISTOR UND VERFAHREN ZUM HERSTELLEN EINES IONENSENSITIVEN FELDEFFEKTTRANSISTORS**
ION-SENSITIVE FIELD EFFECT TRANSISTOR AND A METHOD FOR PRODUCING A TRANSISTOR OF THIS TYPE
TRANSISTOR A EFFET DE CHAMP SENSIBLE AUX IONS, ET PROCEDE DE FABRICATION D'UN TEL TRANSISTOR

(43) Veröffentlichungstag der Anmeldung: 14.07.2004
(73) Patentinhaber: FRAUNHOFER-GESELLSCHAFT ZUR FÖRDERUNG DER ANGEWANDTEN FORSCHUNG E.V., 80636 München (DE)
(72) Erfinder: GRUEGER, Heinrich, 01109 Dresden (DE); KUNATH, Christian, 01108 Dresden (DE)
(74) Vertreter: Schoppe, Fritz, Dipl.-Ing.
(86) Internationale Anmeldenummer: PCT/EP2002/001410
(87) Internationale Veröffentlichungsnummer: WO 2003/069327

(56) Entgegenhaltungen:
- DE-C- 19 939 011
- US-B1- 6 271 573
- KULLICK T ET AL: "Diamond-like carbon-gate pH-ISFET" SENSORS AND ACTUATORS B, ELSEVIER SEQUOIA S.A., LAUSANNE, CH, Bd. 44, Nr. 1-3, 1. Oktober 1997 (1997-10-01), Seiten 441-445, XP004117156 ISSN: 0925-4005

## Beschreibung

Die vorliegende Erfindung bezieht sich auf ionensensitive Feldeffekttransistoren, sowie auf ein Verfahren zum Herstellen derselben.

Ionensensitive Feldeffekttransistoren (ISFET) dienen als Erfassungselemente beispielsweise bei einer Messung eines pH-Wertes, einer Messung von Ionen oder speziellen Stoffkonzentrationen. Anwendungsgebiete für ionensensitive Feldeffekttransistoren sind die Prozessmesstechnik, die Analytik oder die Umwelttechnik, wobei Messungen typischerweise in wässrigen Lösungen oder organischen Mischungen durchgeführt werden.

Zur Messung von pH-Werten wurden vor dem Einsatz von Halbleiter-Erfassungsvorrichtungen ausschließlich Glaselektroden für elektrische Messumformer verwendet. In vielen aggressiven Medien können die Glaselektroden stabil betrieben werden, jedoch ist die Stabilität derselben in starken Alkalienlösungen eingeschränkt. Ferner ist ein Einsatz von Glaselektroden in Flusssäure nicht möglich. Das Einstellen des Messwerts geschieht sehr langsam. Glaselektroden erfordern bei deren Herstellung einen hohen Anteil von Handarbeit, wodurch dieselben teuer sind. Ferner ist das Anwendungsgebiet von Glaselektroden eingeschränkt, da dieselben bei einem Bruch Splitter erzeugen. Beispielsweise ist ein Einsatz von Glaselektroden in der Lebensmitteltechnik nicht möglich, da die bei einem Bruch entstehenden Splitter gefährliche Fremdkörper in einem Lebensmittel darstellen. Glaselektroden werden vorzugsweise in der Prozessmesstechnik eingesetzt.

Im Gegensatz zu den Glaselektroden stellt die Verwendung von ionensensitiven Feldeffekttransistoren eine bruchsichere Alternative zur ionensensitiven Messung von Messflüssigkeiten dar, so dass dieselben in Bereichen, bei denen betriebssichere Zusatzanforderungen verlangt sind, wie beispielsweise in der Lebensmitteltechnik, eingesetzt werden können.

Typischerweise wird bei einer Messung mit einem ionensensitiven Feldeffekttransistors dessen Gate in Berührung mit dem Messfluid gebracht. Eine Potentialänderung an dem Gate, die durch eine Änderung einer Ionenkonzentration in dem Messfluid erzeugt wird, führt zu einem Messsignal. Da bei der Messung das Gate direkt mit der Messflüssigkeit in Berührung kommt, müssen für den Einsatzbereich in aggressiven Medien, wenn eine hohe Langzeitstabilität und/oder wenn eine geringe Drift erforderlich ist, Gatematerialien eingesetzt werden, die über längere Zeiten widerstandsfähig gegen das jeweilige Messmedium sind.

Seit längerer Zeit werden ionensensitive Feldeffekttransistoren mit Si₃N₄ als Gatematerial verwendet. Diese eignen sich für einen Einsatz bei den oben genannten Anforderungen nur bedingt, da das Gate aus Si₃N₄ einer hohen Drift unterworfen ist und eine geringen Langzeitstabilität aufweist. Ferner sind die ionensensitiven Feldeffekttransistoren mit einem Gate aus Si₃N₄ in aggressiven Medien nicht über einen längeren Zeitraum einsetzbar.

Verglichen mit Si₃N₄ als Gatematerial können durch die Verwendung von Metalloxiden als Gatematerial verbesserte Eigenschaften von ionensensitiven Feldeffekttransistoren erreicht werden. Ionensensitive Feldeffekttransistoren mit einem Metalloxid-Gate weisen jedoch den Nachteil auf, dass dieselben gegenüber basischen Lösungen mit höheren Temperaturen und gegenüber Flusssäure keine ausreichende Beständigkeit aufweisen.

In neueren Entwicklungen (siehe z.B. H. Voigt et al., Sensors and Actuators B44 (1997) 441-445) werden ionensensitive Feldeffekttransistoren verwendet, bei denen als Gatematerial amorpher diamantartiger Kohlenstoff (DLC; DLC = "diamond like carbon") verwendet wird, der einen hohen Anteil an sp³ hybridisierten Kohlenstoff-Bindungen aufweist. Derartige Systeme weisen eine sehr hohe chemische Beständigkeit auf, insbesondere in Flusssäure. Ein Nachteil der Verwendung von amorphen diamantartigem Kohlenstoff besteht jedoch darin, dass Schichten aus diesem Material eine hohe Eigenspannung aufweisen, die die Schichthaftung vermindern und zu einem Abplatzen der Schichten und folglich zu einer Zerstörung des ionensensitiven Feldeffekttransistors führen können. Daher sind diese ionensensitiven Feldeffekttransistoren für eine langzeitliche Verwendung in allen Einsatzbereichen nicht geeignet.

Ausgehend von diesem Stand der Technik besteht die Aufgabe der vorliegenden Erfindung darin, einen preisgünstigen, sicheren und langzeitlich stabilen ionensensitiven Feldeffekttransistor und ein Verfahren zum Herstellen desselben zu schaffen.

Diese Aufgabe wird durch einen ionensensitiven Feldeffekttransistor nach Anspruch 1 und ein Verfahren nach Anspruch 10 gelöst.

Die vorliegende Erfindung schafft einen ionensensitiven Feldeffekttransistor mit einem Gate aus Kohlenstoffnitrid.

Ferner schafft die vorliegende Erfindung ein Verfahren zum Herstellen eines ionensensitiven Feldeffekttransistors mit folgenden Schritten:
Bereitstellen eines Substrats (12) mit einem Sourcebereich (14) und einem Drainbereich (16); und
Erzeugen eines Gates (36) aus Kohlenstoffnitrid auf dem Substrat.

Die vorliegende Erfindung schafft einen ionensensitiven Feldeffekttransistor mit einem Gate, das aus einem Material besteht, das eine dem DLC vergleichbare Stabilität in aggressiven Medien aufweist, gute Drifteigenschaften besitzt sowie durch geringe Schichtspannungen eine bessere Haftfestigkeit auf dem Untergrund hat. Das Gatematerial ist ferner in Halbleiterfertigungsprozessen in größerer Stückzahl herstellbar. Die Umweltverträglichkeit des Gatematerials ist gewährleistet.

Die vorliegende Erfindung basiert auf der Erkenntnis, dass ein ionensensitiver Feldeffekttransistor mit einer hohen Stabilität erreicht wird, indem als Gatematerial Kohlenstoffnitrid (CNₓ) verwendet wird. Durch den Einbau von Stickstoffatomen in eine Kohlestoffschicht werden mechanische Eigenspannungen vermindert, wodurch eine gute Haftfähigkeit des erfindungsgemäßen Gatematerials bei einer guten chemischen Beständigkeit gegenüber aggressiven Medien erreicht wird.

Ein Vorteil der vorliegenden Erfindung besteht darin, dass durch eine Veränderung des Stickstoffgehalts bei einer Herstellung die mechanischen und chemischen Eigenschaften des Gatematerials eingestellt werden können, wodurch der ionensensitive Feldeffekttransistor hinsichtlich eines vorgesehenes Einsatzgebiet, z.B. Empfindlichkeit, etc., eingestellt werden kann.

Ein weiterer Vorteil der vorliegenden Erfindung besteht darin, dass der erfindungsgemäße ionensensitive Feldeffekttransistor auf eine sichere Weise, d.h. ohne die Gefahr eines Erzeugens von Splittern bei einem Zerbrechen, betrieben werden kann, wodurch er sich für Einsatzbereiche, die eine hohe Betriebssicherheit erfordern, wie beispielsweise für die Lebensmitteltechnik, eignet.

Ferner kann der erfindungsgemäße ionensensitive Feldeffekttransistor in CMOS-kompatibler Planartechnik auf eine preiswerte Weise hergestellt werden, wobei weitere auf dem Chip integrierte Schaltungselemente, die beispielsweise zur Erfassung von Messdaten verwendet werden, zusammen mit dem ionensensitiven Feldeffekttransistor erzeugt werden können.

Gemäß einem bevorzugten Ausführungsbeispiel der vorliegenden Erfindung umfasst ein ionensensitiver Feldeffekttransistor ein Substrat, auf dessen Oberfläche oberhalb eines Kanalbereichs ein durch reaktives Sputtern erzeugtes Gate aus Kohlenstoffnitrid gebildet ist. Vorzugsweise weist das Gate aus Kohlenstoffnitrid einen Stickstoffgehalt von 18 - 30 at. % auf, um sowohl eine gute Haftung auf dem Substrat als auch einen guten chemischen Schutz zu erreichen.

Bei weiteren Ausführungsbeispielen kann das erfindungsgemäße Gate eine Schichtstruktur umfassen, die mehrere Schichten aus Kohlenstoffnitrid mit unterschiedlichem Stickstoffgehalt aufweist. Zur Erzeugung einer guten Haftung hat die untere Schicht der Schichtstruktur, die benachbart zu dem Kanal-Bereich angeordnet ist, einen hohen Stickstoff-Anteil, und der Stickstoff-Anteil der Schichten nimmt mit zunehmender Entfernung von dem Kanal-Bereich ab, so dass eine äußere Schicht durch den geringeren Stickstoff-Anteil eine hohe chemische Beständigkeit aufweist.

Bei einem weiteren Ausführungsbeispiel kann die erfindungsgemäße Gateschicht aus Kohlenstoffnitrid einen Konzentrationsgradienten umfassen, bei dem die Konzentration des Stickstoffs ausgehend von einer Oberfläche der Schicht, die benachbart zu dem Kanal-Bereich angeordnet ist, mit zunehmender Entfernung von dem Kanalbereich abnimmt, so dass die äußere, dem Kanal-Bereich abgewandte Oberfläche der Schicht, die bei einer Messung in Berührung mit einem Messfluid kommt, zum Erreichen einer hohen chemischen Beständigkeit einen geringen Stickstoffanteil aufweist.

Bevorzugte Ausführungsbeispiele der vorliegenden Erfindung werden nachfolgend unter Bezugnahme auf die beiliegenden Zeichnungen näher erläutert. Es zeigen:

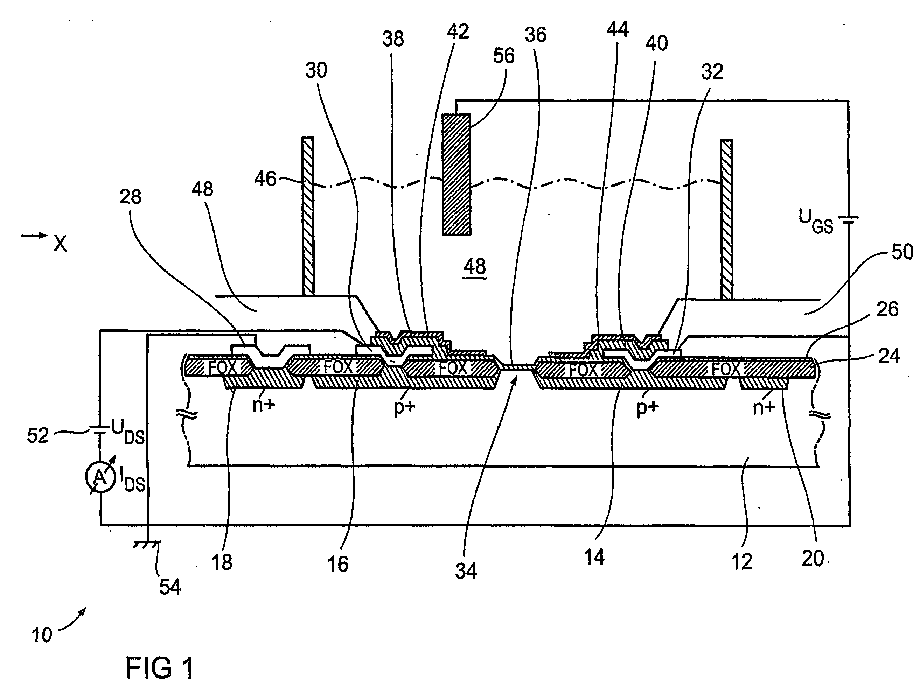

- Fig. 1: eine Querschnittdarstellung eines ionensensitiven Feldeffekttransistors gemäß einem bevorzugten Ausführungsbeispiels der vorliegenden Erfindung.

In Fig. 1 ist eine Querschnittdarstellung eines ionensensitiven Feldeffekttransistors (FET) 10. Der FET 10 umfasst ein Halbleiter-Substrat 12, z.B. ein Siliziumsubstrat. In dem Substrat 12 ist ein p⁺-Sourcebereich 14 und ein p⁺-Drainbereich 16 gebildet. In dem Substrat 12 ist ferner ein erster Substratanschlussbereich 18 und ein zweiter Substratanschlussbereich 20 gebildet, die n⁺-Bereiche (ohmsche Kontakte) umfassen. Bei dem Substrat kann es sich um eine Kombination aus einem Trägersubstrat und einer darauf aufgebrachten Epitaxieschicht handeln, in der die aktiven Bereiche des Bauelements gebildet werden.

Auf einer Oberfläche des Substrats 12 ist eine Feldoxidschicht 24 gebildet. Auf der Feldoxidschicht 24 ist eine weitere isolierende Schicht 26 gebildet.

Der FET 10 umfasst ferner einen Anschlusskontakt 28, z.B. aus Aluminium, der sich durch die Feldoxidschicht 24 und die isolierende Schicht 26 erstreckt und mit dem ersten Substratanschlussbereich 18 verbunden ist. Ferner umfasst der FET 10 einen Drainkontakt (Drain) 30, der sich durch die Feldoxidschicht 24 und die isolierende Schicht 26 erstreckt und mit dem Drainbereich 16 verbunden ist, und einen Sourcekontakt (Source) 32, der sich durch die Feldoxidschicht 24 und die isolierende Schicht 26 erstreckt und mit dem Sourcebereich 14 verbunden ist.

Zwischen dem Sourcebereich 14 und dem Drainbereich 16 ist ein Kanal-Bereich 34 definiert. Ein Abschnitt der Oberfläche des Substrats 12 oberhalb des Kanal-Bereichs 34 liegt frei, ist also weder durch die Feldoxidschicht 24 noch durch die isolierende Schicht 26 bedeckt. In diesem freiliegenden Bereich ist ein Gate 36 gebildet, das erfindungsgemäß aus Kohlenstoffnitrid (CNₓ) gebildet ist. Bei einem bevorzugten Ausführungsbeispiel weist das Gate 36 vorzugsweise einen Stickstoffgehalt in einem Bereich von 18-30 at. % auf. Bei diesen Beimengungen ergibt sich sowohl eine gute Haftfestigkeit auf darunterliegenden Schichten als auch eine gute chemische Widerstandsfähigkeit gegenüber aggressiven Chemikalien erreicht wird. Die Haftfestigkeit der Gate-Kohlenstoffnitridschicht ist von der Stickstoff-Beimengung abhängig, wobei die Haftfähigkeit mit zunehmendem Stickstoffgehalt zunimmt.

Wie in Fig.1 zu erkennen ist, umfasst der FET 10 weitere Isolationsschichten 38 und 40, die auf der Drain 30 bzw. auf der Source 32 gebildet sind. In einem Bereich, der sich von der Drain 30 bis zu dem Gate 36 bzw. von der Source 32 bis zu dem Gate 36 erstreckt, ist auf der Isolationsschicht 38 bzw. 40 und auf der isolierenden Schicht 26 eine Schutzschicht 42 bzw. 44 gebildet. Die Schutzschichten 42 und 44 schützen alle Bereiche des FET 10, außer dem Gate 36 vor einem Kontakt mit dem Messmedium. Die Schutzschichten 42 und 44 dienen zum chemischen und mechanischen Schutz der Source 32 und der Drain 34. Vorzugsweise sind die Schutzschichten 42 und 44 aus einem Material gebildet, das einen hohen chemischen und mechanischen Schutz für den FET 10 liefert. Da die isolierende Schichten 38, 40 und 26 zwischen den Schutzschichten 42 bzw. 44 und der Source 32 bzw. der Drain 34 angeordnet sind, können die Schutzschichten 42 bzw. 44 auch durch ein leitfähiges Material gebildet sein.

Der oben beschriebene ionensensitive FET weist aufgrund des Einbaus von Stickstoff in das Gate reduzierte mechanische Eigenspannungen in dem Gate auf, wodurch eine verbesserte Haftfähigkeit ohne eine Verschlechterung des sensorischen Verhaltens erreicht wird. Die Haftfähigkeit des Gates 36 aus Kohlenstoffnitrid ist dabei im Vergleich zu einem herkömmlichen Gate aus amorphem diamantartigem Kohlenstoff (DLC) bereits für kleine Beimengungen im Dotiermaßstab, d.h. in einem Bereich ab 10¹⁴ Atome pro cm³, erhöht.

Ferner weist das Gate 36 aus Kohlenstoffnitrid eine hohe Widerstandsfähigkeit gegenüber chemisch aggressiven Substanzen auf, die durch eine geeignete Stickstoff-Dotierung der Kohlenstoffnitridschicht, ebenso wie die Haftfähigkeit, eingestellt werden kann, so dass der ionensensitive FET 10 in aggressiven chemischen Medien, wie beispielsweise Flusssäure, mit großer Beständigkeit betrieben werden kann. Ebenso zeichnet sich der erfindungsgemäße ionensensitive FET aufgrund der guten Beständigkeit von Kohlenstoffnitrid durch eine hohe Langzeitstabilität und eine geringe Drift aus.

Vorzugsweise wird der erfindungsgemäße ionensensitive Feldeffekttransistor in einem CMOS-Prozess hergestellt, wodurch ein preisgünstiges Herstellen desselben ermöglicht ist. Typischerweise werden dabei mehrere ionensensitive Feldeffekttransistoren in einem Waferverbund auf 150mm Halbleiterwafern gefertigt. Daraufhin werden Chips, die eine Fläche von etwa 4mm x 4mm umfassen, vereinzelt, auf Platinen befestigt und elektrisch kontaktiert. Zum Herstellen eines Messsystem wird ein Chip anschließend in einen geeigneten Aufbau überführt. Typischerweise stellt ein Messsystem, bei dem der ionensensitive Feldeffekttransistor eingebaut wird, einen Eintauchsensor dar, der beispielsweise zum Erfassen eines pH-Werts in Industrieabwässern eingesetzt werden kann.

Zur Erzeugung des Gates 36 wird vorzugsweise ein reaktives Sputtern eines Graphittargets unter Stickstoffatmosphäre verwendet. Andere bekannte Abscheidungsverfahren, die die Anforderungen an die Schichtqualität und Homogenität erfüllt, können ebenso zur Aufbringung des Gates 36 verwendet werden kann. Beispiele geeigneter Verfahren umfassen eine Verdampfung, eine Ablation oder eine plasmaunterstützte chemische Gasphasenabscheidung (PECVD = Plasma Enhanced Chemical Vapour Deposition).

Vorzugsweise wird der Stickstoffgehalt bei dem Erzeugen des Gates 36 entsprechend den erwünschten mechanischen und/oder chemischen Anforderungen bei einem Einsatz des FET in einem vorgesehenen Anwendungsgebiet eingestellt. Der Stickstoffgehalt kann von geringen Beimengungen im Dotiermaßstab, die gerade ausreichen, Eigenschaften des amorphen diamantartigen Kohlenstoffs zu verändern, bis hin zu einer Stöchiometrie des C₃N₄ oder noch höher reichen.

Ferner kann das Gate 36 bei anderen Ausführungsbeispielen eine Schichtstruktur mit mehreren Schichten aus Kohlenstoffnitrid mit unterschiedlichem Stickstoffgehalt oder eine Schicht (Gradientenschicht) mit einem sich in Richtung der Dicke der Schicht (y-Richtung in Fig. 1) ändernden Stickstoffgehalt umfassen. Hierdurch wird ein vorteilhaftes Verhalten mit einer sehr guten Haftfähigkeit bzw. einer sehr guten chemischen Beständigkeit erreicht.

Bei einem Gate 36 mit einer Schichtstruktur weist eine untere, benachbart zu dem Kanal-Bereich 34 angeordnete Schicht der Schichtstruktur zur Erzeugung einer guten Haftung einen hohen Stickstoff-Anteil auf, wobei der Stickstoff-Anteil der Schichten mit zunehmender Abstand von dem Kanal-Bereich abnimmt, so dass eine äußere oder in y-Richtung (siehe Fig. 1) obere Oberfläche des Gates 36, die beim Betrieb des ionensensitiven Feldeffekttransistor in Berührung mit dem Messmedium kommt, durch den geringeren Stickstoff-Anteil eine hohe chemische Beständigkeit aufweist.

Bei einem weiteren Ausführungsbeispiel umfasst das Gate 36 einen Konzentrationsgradient, so dass die Stickstoff-Konzentration des Gates 36 ausgehend von einer Oberfläche des Gates benachbart zu dem Kanal-Bereich 34 mit zunehmender Entfernung von demselben abnimmt, so dass eine äußere oder in y-Richtung (siehe Fig. 1) obere Oberfläche des Gates 36, die bei einem Betreiben des ionensensitiven Feldeffekttransistor in Berührung mit dem Messmedium kommt, durch den geringeren Stickstoff-Anteil eine hohe chemische Beständigkeit aufweist.

Bei einem Ausführungsbeispielen kann zusätzlich eine Zwischenschicht vorgesehen sein, die einerseits eine gute Haftfähigkeit auf dem Siliziumsubstrat 12 und/oder der Feldoxidschicht 24 und andererseits eine gute Haftfähigkeit auf der Gateschicht 28 aufweist.

Im folgenden wird nun ein Beispiel zur Verwendung des erfindungsgemäßen ionensensitiven Feldeffekttransistors erläutert. Bei diesem Beispiel wird eine pH-Wert-Messung unter Verwendung des ionensensitiven Feldeffekttransistors durchgeführt. In einem in Fig. 1 schematisch gezeigtem Behälter 46 ist ein Messfluid 48, z.B. eine wässrige Lösung, enthalten, dessen pH-Wert zu messen ist. Wie in Fig. 1 zu erkennen ist, ist der Behälter 46 derart auf dem ionensensitiven FET 10 angeordnet, dass die wässrige Lösung mit dem Gate 36 in Kontakt ist. Von den übrigen Bereichen des FET 10 ist die wässrige Lösung durch die Schichten 42 und 44 sowie durch die weiteren Schichten 48 und 50, die in Fig. 1 schematisch gezeigt sind, getrennt. Eine Referenzelektrode 56, die beispielsweise aus Ag, AgCl und KCl bestehen kann, ist in das Messmedium eingebracht.

Über eine Spannungsquelle 52, die zwischen die Drain 30 und die Source 32 eine elektrische Spannung U_{DS} angelegt, die einen Drain-Source-Strom I_{DS} bewirkt. Der Anschlusskontakt 28 liegt auf einem Bezugspotenzial 54, z.B. Masse.

Zwischen der Referenzelektrode 56 und dem Gate 36 bildet sich aufgrund einer unterschiedlichen elektrochemischen Spannungs-Wertigkeit der Materialien der Referenzelektrode und des Gates eine elektrische Spannung aus, die von einer Ionenkonzentration des Messmediums abhängt.

Bei einem bevorzugten Ausführungsbeispiel ist die Spannungsquelle 52 ausgebildet, um die Drain-Source-Spannung so zu steuern, dass stets ein konstanter Drain-Source-Strom fließt. Bei diesem Ausführungsbeispiel wird folglich bei einer sich ändernden Ionenkonzentration das Gatepotential durch den konstanten Drain-Source-Strom bestimmt und eingestellt. Ändert sich die Ionenkonzentration des Messmediums, so ändert sich aufgrund der sich ändernden elektrischen Spannung zwischen der Referenzelektrode 56 und dem Gate 36 das Potential der Referenzelektrode 56 bezüglich Masse. Dabei stellt die zwischen der Source und der Referenzelektrode 56 anliegende Spannung U_{GS} eine Messgröße dar, die von einer Ionenkonzentration des Messmediums abhängt, wodurch die Ionenkonzentration des Messmediums durch ein Abgreifen der Spannung U_{GS} ermittelt werden kann.

Obwohl bei den beschriebenen Ausführungsbeispielen lediglich ein FET mit einem p-Substrat, n-Source-Bereich und n-Drain-Bereich beschrieben wurde, ist die vorliegende Erfindung nicht hierauf beschränkt, sondern umfasst auch FETs mit n-Substrat, p-Source-Bereich und p-Drain-Bereich.

## Patentansprüche

1. Ionensensitiver Feldeffekttransistor, **dadurch gekennzeichnet daß** derselbe ein Gate (36) aus Kohlenstoffnitrid aufweist.

2. Ionensensitiver Feldeffekttransistor nach Anspruch 1, bei dem das Gate (36) aus Kohlenstoffnitrid einen Stickstoffgehalt aufweist, der größer als 10¹⁴ Stickstoffatome/cm³ ist und geringer oder gleich dem Stickstoffgehalt ist, der einer Stöchiometrie von C₃N₄ entspricht.

3. Ionensensitiver Feldeffekttransistor nach Anspruch 1 oder 2, bei dem das Gate (36) einen Stickstoffgehalt von 18 at. % bis 30 at. % aufweist.

4. Ionensensitiver Feldeffekttransistor nach Anspruch 1, bei dem das Gate (36) einen Stickstoffgehalt entsprechend einer Stöchiometrie von C₃N₄ aufweist.

5. Ionensensitiver Feldeffekttransistor nach einem der Ansprüche 1 bis 4, bei dem das Gate (36) mehrere übereinander angeordnete Schichten aus Kohlenstoffnitrid aufweist, die sich bezüglich ihres Stickstoffgehalts unterscheiden.

6. Ionensensitiver Feldeffekttransistor nach Anspruch 5, bei dem das Gate (36) zumindest teilweise auf einem Substrat angeordnet ist, wobei der Stickstoffgehalt der übereinander angeordneten Schichten ausgehend von einer untersten Schicht, die zumindest teilweise auf dem Substrat angeordnet ist, mit zunehmendem Abstand in Richtung der Dicke der Schichtfolge abnimmt.

7. Ionensensitiver Feldeffekttransistor nach einem der Ansprüche 1 bis 4, bei dem das Gate (36) eine Kohlenstoffnitridschicht aufweist, deren Stickstoffgehalt sich in Richtung der Dicke der Kohlenstoffnitridschicht verändert.

8. Ionensensitiver Feldeffekttransistor nach Anspruch 7, bei dem die Kohlenstoffnitridschicht zumindest teilweise auf einem Substrat (12) angeordnet ist, wobei der Stickstoffgehalt der Kohlenstoffnitridschicht in Richtung der Dicke der Schicht mit zunehmendem Abstand von dem Substrat abnimmt.

9. Ionensensitiver Feldeffekttransistor nach einem der Ansprüche 1 bis 8, bei dem das Gate (36) zumindest teilweise auf einer Zwischenschicht angeordnet ist, wobei die Zwischenschicht eine Haftfestigkeit sowohl bezüglich Silizium als auch bezüglich Kohlenstoffnitrid aufweist.

10. Verfahren zum Herstellen eines ionensensitiven Feldeffekttransistors mit folgenden Schritten:
Bereitstellen eines Substrats (12) mit einem Sourcebereich (14) und einem Drainbereich (16); und
Erzeugen eines Gates (36) aus Kohlenstoffnitrid auf dem Substrat.

11. Verfahren nach Anspruch 10, bei dem der Schritt des Erzeugens des Gates (36) ein reaktives Sputtern eines Graphittargets unter Stickstoffatmosphäre, eine Verdampfung, eine Ablation oder eine chemische Gasphasenabscheidung umfasst.

12. Verfahren nach Anspruch 10 oder 11, bei dem der Schritt des Erzeugens eines Gates (36) folgende Schritte umfasst:
Erzeugen einer Zwischenschicht, die sowohl eine Haftfähigkeit auf dem Substrat (12) als auch auf Kohlenstoffnitrid aufweist; und
Erzeugen der Kohlenstoffnitridschicht, die sich zumindest teilweise auf der Zwischenschicht erstreckt.

13. Verfahren nach einem der Ansprüche 10 bis 12, bei dem der Schritt des Erzeugens eines Gates (36) den Schritt eines Erzeugens von mehreren Kohlenstoffnitridschichten aufweist, die sich bezüglich des Stickstoffgehalts unterscheiden.

14. Verfahren nach einem der Ansprüche 10 bis 12, bei dem der Schritt des Erzeugens eines Gates (36) den Schritt eines Erzeugens der Kohlenstoffnitridschicht aufweist, deren Stickstoffgehalt sich in Richtung der Dicke der Schicht verändert.

## Claims

1. An ion sensitive field effect transistor **characterized in that** the same has a gate (36) of carbon nitride.

2. The ion sensitive field effect transistor according to claim 1, wherein the gate (36) of carbon nitride has a nitrogen content, which is higher than 10¹⁴ nitrogen atoms/cm³ and lower than or equal to the nitrogen content corresponding to a stochiometry of C₃N₄.

3. The ion sensitive field effect transistor according to claim 1 or 2, wherein the gate (36) has a nitrogen content of 18 at % to 30 at %.

4. The ion sensitive field effect transistor according to claim 1, wherein the gate (36) has a nitrogen content corresponding to a stochiometry of C₃N₄.

5. The ion sensitive field effect transistor according to one of claims 1 to 4, wherein the gate (36) has several stacked layers of carbon nitride, which differ with regard to their nitrogen content.

6. The ion sensitive field effect transistor according to claim 5, wherein the gate (36) is arranged at least partly on the substrate, wherein the nitrogen content of the stacked layers decreases starting from a lowermost layer, which is arranged at least partly on the substrate, with increasing distance in the direction of the thickness of the layer sequence.

7. The ion sensitive field effect transistor according to one of claims 1 to 4, wherein the gate (36) has a carbon nitride layer, whose nitride content changes in the direction of a thickness of the carbon nitride layer.

8. The ion sensitive field effect transistor according to claim 7, wherein the carbon nitride layer is arranged at least partly on a substrate (12), wherein the nitrogen content of the carbon nitride layer decreases in the direction of the thickness of the layer with increasing distance from the substrate.

9. The ion sensitive field effect transistor according to one of claims 1 to 8, wherein the gate (36) is arranged at least partly on an intermediate layer, wherein the intermediate layer has an adhesion strength both with regard to silicon and with regard to carbon nitride.

10. A method for producing an ion sensitive field effect transistor, comprising:
providing a substrate (12) having a source region (14) and a drain region (16); and
forming a gate (36) of carbon nitride on the substrate.

11. The method according to claim 10, wherein the step of forming the gate (36) comprises reactive sputtering of a graphite target in a nitrogen atmosphere, an evaporation, an ablation or a chemical vapor deposition.

12. The method according to claim 10 or 11, wherein the step of forming a gate (36) comprises:
forming an intermediate layer, which has both an adhesion capability on the substrate (12) and on the carbon nitride; and
forming the carbon nitride layer, which extends at least partly on the intermediate layer.

13. The method according to one of claims 10 to 12, wherein the step of forming a gate (36) comprises the step of forming several carbon nitride layers, which differ with regard to the nitrogen content.

14. The method according to one of claims 10 to 12, wherein the step of forming a gate (36) comprises the step of forming the carbon nitride layer, whose nitrogen content changes in the direction of the thickness of the layer.

## Revendications

1. Transistor à effet de champ sensible aux ions, **caractérisé par le fait qu'**il présente une porte de déclenchement (36) en nitrure de carbone.

2. Transistor à effet de champ sensible aux ions selon la revendication 1, dans lequel la porte de déclenchement (36) en nitrure de carbone présente une teneur en azote qui est supérieure à 10¹⁴ atomes d'azote/cm³ et inférieure ou égale à la teneur en azote qui correspond à une stoechiométrie de C₃N₄.

3. Transistor à effet de champ sensible aux ions selon la revendication 1 ou 2, dans lequel la porte de déclenchement (36) présente une teneur en azote de 18 % en atomes à 30 % en atomes.

4. Transistor à effet de champ sensible aux ions selon la revendication 1, dans lequel la porte de déclenchement (36) présente une teneur en azote correspondant à une stoechiométrie de C₃N₄.

5. Transistor à effet de champ sensible aux ions selon l'une des revendications 1 à 4, dans lequel la porte de déclenchement (36) présente plusieurs couches de nitrure de carbone, disposées l'une au-dessus de l'autre, qui diffèrent quant à leur teneur en azote.

6. Transistor à effet de champ sensible aux ions selon la revendication 5, dans lequel la porte de déclenchement (36) est disposée au moins partiellement sur un substrat, la teneur en azote des couches disposées l'une au-dessus de l'autre diminuant, partant d'une couche inférieure qui est disposée au moins partiellement sur le substrat, au fur et à mesure qu'augmente la distance dans le sens de l'épaisseur de la suite de couches.

7. Transistor à effet de champ sensible aux ions selon l'une des revendications 1 à 4, dans lequel la porte de déclenchement (36) présente une couche de nitrure de carbone dont la teneur en azote varie dans le sens de l'épaisseur de la couche de nitrure de carbone.

8. Transistor à effet de champ sensible aux ions selon la revendication 7, dans lequel la couche de nitrure de carbone est disposée au moins partiellement sur un substrat (12), la teneur en azote de la couche de nitrure de carbone diminuant dans le sens de l'épaisseur de la couche au fur et à mesure qu'augmente la distance par rapport au substrat.

9. Transistor à effet de champ sensible aux ions selon l'une des revendications 1 à 8, dans lequel la porte de déclenchement (36) est disposée au moins partiellement sur une couche intermédiaire, la couche intermédiaire présentant une force d'adhérence tant en ce qui concerne le silicium qu'en ce qui concerne le nitrure de carbone.

10. Procédé de fabrication d'un transistor à effet de champ sensible aux ions, aux étapes suivantes consistant à :
préparer un substrat (12) avec une zone de source (14) et une zone de drain (16) ; et
générer une porte de déclenchement (36) en nitrure de carbone sur le substrat.

11. Procédé selon la revendication 10, dans lequel l'étape de génération de la porte de déclenchement (36) comporte une pulvérisation réactive d'une cible de graphite dans un milieu d'azote, une évaporation, une ablation ou un dépôt chimique en phase gazeuse.

12. Procédé selon la revendication 10 ou 11, dans lequel l'étape de génération d'une porte de déclenchement (36) comporte les étapes suivantes consistant à :
générer une couche intermédiaire qui présente une force d'adhérence tant au substrat (12) qu'au nitrure de carbone ; et
générer la couche de nitrure de carbone qui s'étend au moins partiellement sur la couche intermédiaire.

13. Procédé selon l'une des revendications 10 à 12, dans lequel l'étape de génération d'une porte de déclenchement (36) présente l'étape consistant à générer plusieurs couches de nitrure de carbone qui diffèrent en ce qui concerne la teneur en azote.

14. Procédé selon l'une des revendications 10 à 12, dans lequel l'étape de génération d'une porte de déclenchement (36) présente l'étape consistant à générer la couche de nitrure de carbone dont la teneur en azote varie dans le sens de l'épaisseur de la couche.
